# EUROPEAN PATENT APPLICATION

(11) **EP 3 190 777 A1**
(43) Date of publication of application: **12.07.2017**
(21) Application number: 16754163.0
(22) Date of filing: 17.05.2016
(51) Int. Cl.: H04L 29/08

(54) **DATA STORAGE AND ACQUISITION METHOD, DEVICE AND SYSTEM**

(30) Priority: 11.11.2015 CN 201510765557
(71) Applicant: LE Holdings (Beijing) Co., Ltd., Beijing 100025 (CN); Leauto Intelligent Technology (BEIJING) Co. Ltd, Beijing 100020 (CN)
(72) Inventor: XIE, Lingfei, Beijing 100020 (CN); WANG, Mujin, Beijing 100020 (CN)
(74) Representative: Gosnall, Toby
(86) International application number: PCT/CN2016/082326
(87) International publication number: WO 2017/080157

(57) **Abstract**

The present disclosure discloses a method, an apparatus, and a system of data storage and acquisition, wherein the method of storing data is implemented at a wireless access equipment side and the method of storing data includes: establishing connections with a storage device and a mobile terminal; acquiring a store instruction sent by the mobile terminal; acquiring to-be-stored data from the mobile terminal according to the store instruction; storing the to-be-stored data into the storage device.

## Description

### CROSS-REFERENCE TO RELATED APPLICATIONS

This application is based upon and claims priority to Chinese Patent Application 201510765557.9, titled "Method, Apparatus, and System of Data Storage and Acquisition", filed on November 11 2015, the entire contents of which are incorporated herein by reference.

### FIELD OF TECHNOLOGY

The present disclosure generally relates to a technical field of Internet, and more particularly, to a method, an apparatus, and a system of data storage and acquisition.

### BACKGROUND

In line with the continuous popularization of mobile phones and other mobile terminals, more and more people tend to use their mobile phone and other mobile terminals to take photos, shoot videos, or listen to music and, with mobile phones or other mobile terminals, the photos and videos can be shared with the friends in a timely manner. Mobile phones and other mobile terminals, however, are limited in storage space; for instance, with prior art the maximum storage space a mobile phone has is 128G, most mobile phones having a storage space of 16G or 32G, and certain mobile phones having even less storage space. To facilitate their use, most people have their mobile phone installed with various apps, and after storage of these apps, photos, videos, etc., most mobile phones run into the problem of insufficient storage space.

Particularly during traveling, most people choose not to take their laptop computer with them so as to reduce their luggage weight, but they will take a lot of photos or shoot many videos as souvenirs during traveling. Considering that the photos and videos cannot be shared timely with the friends when using an SLR camera or other cameras, most people prefer to take photos and shoot videos using a mobile phone; however, mobile phones and other mobile terminals are limited in storage space, and if no laptop computer is brought along, it would be inconvenient to export the photos and one cannot take or shoot too many photos or videos, thereby causing great inconveniences to the people. Furthermore, if no laptop computer is taken on a long journey, the entertainment content in mobile phones and other mobile terminals can hardly satisfy people's requirement for entertainment due to the rather limited storage space of mobile phones and other mobile terminals. How to enable a mobile phone or another mobile terminal to conveniently store data in other storage devices or to acquire data from other storage devices has become a problem needs to be solved.

### SUMMARY

Given the above-related problems, the present disclosure is proposed with the objective of providing a method of communication and an apparatus of communication between devices that are capable of solving, or at least partially solving, the above-related problems.

According to one aspect of the disclosure, there is provided a method of storing data, the method being implemented at a wireless access equipment side and including:
establishing connections with a storage device and a mobile terminal;
acquiring a store instruction sent by the mobile terminal;
acquiring to-be-stored data from the mobile terminal according to the store instruction; and
storing the to-be-stored data into the storage device.

According to another aspect of the disclosure, there is provided a method of acquiring data, the method being implemented at a wireless access equipment side and including:
establishing connections with a storage device and a mobile terminal;
acquiring an acquisition instruction sent by the mobile terminal;
acquiring to-be-acquired data from the storage device according to the acquisition instruction; and
sending the to-be-acquired data to the mobile terminal.

According to still another aspect of the present disclosure, there is provided a data storage apparatus, and the apparatus including:
one or more processors; and
a memory;
one or more programs, wherein one or more programs are stored in the memory, and when executed by the one or more processors, the one or more programs cause the one or more processors to perform:
establishing connections with a storage device and a mobile terminal;
acquiring a store instruction sent by the mobile terminal;
acquiring to-be-stored data from the mobile terminal according to the store instruction; and
storing the to-be-stored data into said storage device.

According to yet another aspect of the present disclosure, there is provided a data acquisition apparatus, and the apparatus including:
one or more processors; and
a memory;
one or more programs, wherein one or more programs are stored in the memory, and when executed by the one or more processors, the one or more programs cause the one or more processors to perform:
establishing connections with a storage device and a mobile terminal;
acquiring an acquisition instruction sent by the mobile terminal;
acquiring to-be-acquired data from the storage device according to the acquisition instruction; and
sending the to-be-acquired data to the mobile terminal.

According to further another aspect of the present disclosure, there is provided a data storage/acquisition system, which includes a wireless access equipment, a storage device, and a mobile terminal;
wherein, the wireless access equipment includes the aforesaid data storage apparatus and/or the aforesaid data acquisition apparatus; the storage device connects with the data storage apparatus and/or the data acquisition apparatus; the mobile terminal connects with the data storage apparatus and/or the data acquisition apparatus.

Technical proposal provided according to the present disclosure, wherein the method of storing data is implemented at the wireless access equipment side, connections are firstly established with a storage device and a mobile terminal to acquire a store instruction from the mobile terminal, then the to-be-stored data are acquired from the mobile terminal according to the store instruction, and finally the to-be-stored data are stored into the storage device. The technical proposal provided by the present disclosure provides a means of storage of a mobile terminal's data, whereby the user may conveniently store the data into a storage device via a wireless access equipment when it is not convenient to export data from a mobile terminal or when the mobile terminal has insufficient or limited storage space.

The above illustration is only a general description of the technical solutions provided by the present disclosure, aiming at making the technical means of the present disclosure understood more clearly and thereby practiced based on the contents of the specification. Further, in order to make the above and other objects, features and advantages of the present disclosure more obvious, specific implementations of the present disclosure will be exemplified below.

### BRIEF DESCRIPTION OF THE DRAWINGS

One of ordinary skill in this art will appreciate other advantages from the following detailed description of exemplary embodiments herein. Drawings are only for showing exemplary embodiments but not for limiting the scope of the present disclosure. Through the drawings, similar reference numbers represent similar elements. Of the drawings:
Fig. 1 is a schematic process flow chart for the method of storing data according to an embodiment of the disclosure;
Fig. 2 is a schematic process flow chart for the method of storing data according to another embodiment of the disclosure;
Fig. 3 is a schematic process flow chart for the method of acquiring data according to an embodiment of the disclosure;
Fig. 4 is a schematic process flow chart for the method of acquiring data according to another embodiment of the disclosure;
Fig. 5 is a schematic connection block diagram for the data storage apparatus, the mobile terminal, and the storage device according to an embodiment of the disclosure;
Fig. 6 is a schematic connection block diagram for the data storage apparatus, the mobile terminal, the storage device, and the cloud according to another embodiment of the disclosure;
Fig. 7 is a schematic connection block diagram for the data acquisition apparatus, the mobile terminal, and the storage device according to an embodiment of the disclosure;
Fig. 8 is a schematic connection block diagram for the data acquisition apparatus, the mobile terminal, and the storage device according to another embodiment of the disclosure;
Fig. 9 schematically shows a block diagram of a computing device for executing the method of data storage and acquisition according to some embodiments of the disclosure; and
Fig. 10 schematically shows a storage cell for holding or carrying procedure codes for realizing the method of data storage and acquisition according to some embodiments of the disclosure.

### DESCRIPTION OF THE EMBODIMENTS

Exemplary embodiments of the present disclosure will be described below in detail with reference to drawings. Even though exemplary embodiments of the present disclosure are presented in drawings, it shall be appreciated that the present disclosure may be practiced in various manners without being limited to the embodiments set forth herein. Instead, the embodiments are provided herein to make the present disclosure be understood more thoroughly and to more completely convey the scope of the present disclosure to one of ordinary skill in this art.

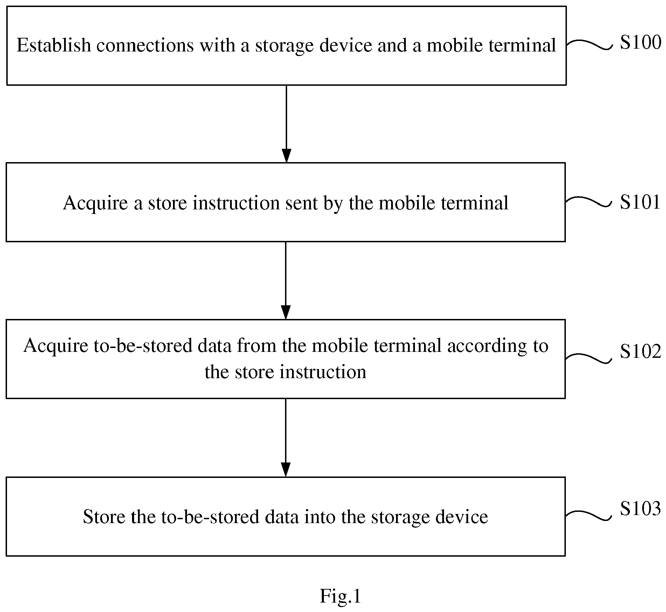

Fig. 1 illustrates a schematic process flow chart for the method of storing data according to an embodiment of the present disclosure, the method being implemented at the wireless access equipment side, and as shown in Fig. 1, this method including the following steps:
Step S100: establishing connections with a storage device and a mobile terminal.

Wherein, the storage device can be set inside or outside of the wireless access equipment. For example, when the storage device is set outside of the wireless access equipment, the storage device can be a portable hard disk, a U-disk, or a card reader with an inserted storage card, more particularly, for example a portable hard disk or similar storage device can be connected with the wireless access equipment by means of a data cord, and for example a U-disk or similar storage device can be directly plugged into the appropriate slot on the wireless access equipment, hence establishing a connection between the storage device and the wireless access equipment. Furthermore, the mobile terminal can be a mobile phone, a PAD, etc. The mobile terminal shall have an application program that controls the wireless access equipment. The wireless access equipment may communicate with the mobile terminal by use of DLNA, SMB, or other protocols.

Step S101: acquiring a store instruction sent by the mobile terminal.

After the connection is established between the wireless access equipment and the mobile terminal, the user of the mobile terminal may send a store instruction to the wireless access equipment by use of the application program in the mobile terminal and then the wireless access equipment acquires the store instruction.

Step S102: acquiring to-be-stored data from the mobile terminal according to the store instruction.

According to the store instruction acquired in Step S101, the to-be-stored data is acquired from the mobile terminal.

Step S103: storing the to-be-stored data into the storage device.

The to-be-stored data acquired in Step S102 is stored into the storage device.

The method of storing data provided according to the embodiment, the method being implemented at the wireless access equipment side, connections being firstly established with a storage device and a mobile terminal to acquire a store instruction from the mobile terminal, then the to-be-stored data being acquired from the mobile terminal according to the store instruction, and finally the to-be-stored data being stored into the storage device. The technical proposal provided by the present disclosure provides a means of storing a mobile terminal's data, whereby the user may conveniently store the data into a storage device via a wireless access equipment when it is not convenient to export data from a mobile terminal or when the mobile terminal has insufficient or limited storage space.

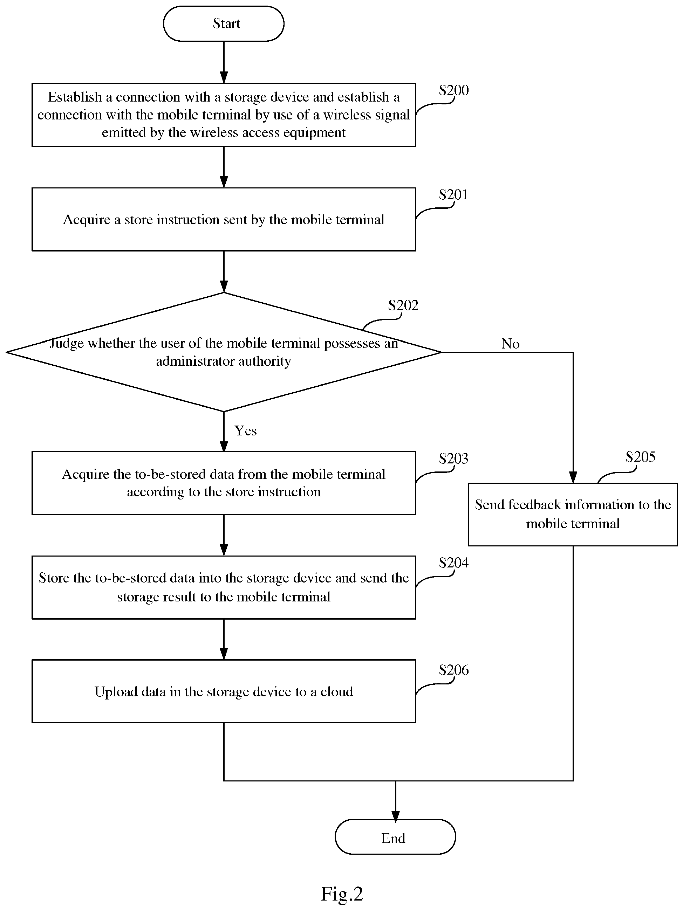

Fig. 2 illustrates a schematic process flow chart for the method of storing data according to another embodiment of the present disclosure, the method being implemented at the wireless access equipment side, and as shown in Fig. 2, this method including the following steps:
Step S200: establishing a connection with a storage device and establishing a connection with the mobile terminal by use of a wireless signal emitted by the wireless access equipment.

Wherein, the storage device can be set inside or outside of the wireless access equipment.

Step S201: acquiring a store instruction sent by the mobile terminal.

After the connection is established between the wireless access equipment and the mobile terminal, the user of the mobile terminal may send a store instruction to the wireless access equipment by use of the application program in the mobile terminal and then the wireless access equipment acquires the store instruction.

Step S202: judging whether the user of the mobile terminal possesses an administrator authority; if yes, proceeding to Step S203; if no, proceeding to Step S205.

To ensure the safety of the data in the storage device, only when the user of the mobile terminal possesses an administrator authority is he/she allowed to store the mobile terminal's data into the storage device by means of the wireless access equipment, in other words not every mobile terminal that has established a connection with the wireless access equipment is allowed to store the data into the storage device by means of the wireless access equipment.

Step S203: acquiring the to-be-stored data from the mobile terminal according to the store instruction.

If it is judged in Step S202 that the user of the mobile terminal possesses an administrator authority, then Step S203 is executed to acquire the to-be-stored data from the mobile terminal according to the store instruction.

For example, the store instruction is for storing picture 1 into the storage device, and after it is judged in Step S202 that the user of the mobile terminal possesses an administrator authority, Step S203 is then executed to acquire picture 1 from the mobile terminal according to the store instruction.

Step S204: storing the to-be-stored data into the storage device and sending the storage result to the mobile terminal.

After the to-be-stored data are acquired from the mobile terminal, Step 204 stores the to-be-stored data into the storage device and sends the storage result to the mobile terminal. More particularly, the storage result may be sent to the mobile terminal as appropriate to the actual storage situation, for example a storage result such as insufficient storage space, storage succeeded, or storage failed may be sent to the mobile terminal.

Step S205: sending feedback information to the mobile terminal.

When it is judged in Step S202 that the user of the mobile terminal does not possess the administrator authority, a piece of feedback information may be sent to the mobile terminal, advising the user of the mobile terminal that he/she does not possess the data storage authority.

The present method may also include another step to upload data in the storage device to a cloud.

Step S206: uploading data in the storage device to a cloud.

The data in the storage device is uploaded to the cloud, thereby enabling data backup.

For example, with the technical proposal provided according to the present disclosure, the user on a journey without carrying a laptop computer can store the photos, videos and other data in the mobile phone (i.e., the mobile terminal) into a hard disk, U-disk, or another storage device. More particularly, the wireless access equipment may include at least one client identification module, the wireless access equipment being able to emit wireless signals by use of any client identification module. By use of the wireless access signal, the wireless access equipment is able to establish a connection with a mobile phone. A user possessing an administrator authority may conveniently store the mobile phone's data into the storage device, hence alleviating the storage load of the mobile phone.

The method of storing data provided according to the embodiment, the method being implemented at the wireless access side, a connection being firstly established with a storage device and a connection being established with a mobile terminal by use of a wireless signal emitted by the wireless access equipment, a store instruction sent by the mobile terminal being obtained, then when it is judged that the user of the mobile terminal possesses an administrator authority, the to-be-stored data being acquired from the mobile terminal according to the store instruction, and finally the to-be-stored data being stored into the storage device and the data in the storage device being uploaded to the cloud. The technical proposal provided by the present disclosure provides a means of storing a mobile terminal's data, whereby the user possessing the administrator authority may conveniently store the data into a storage device via a wireless access equipment when it is not convenient to export data from the mobile terminal or when the mobile terminal has insufficient or limited storage space, thus ensuring the safety of data in the storage device.

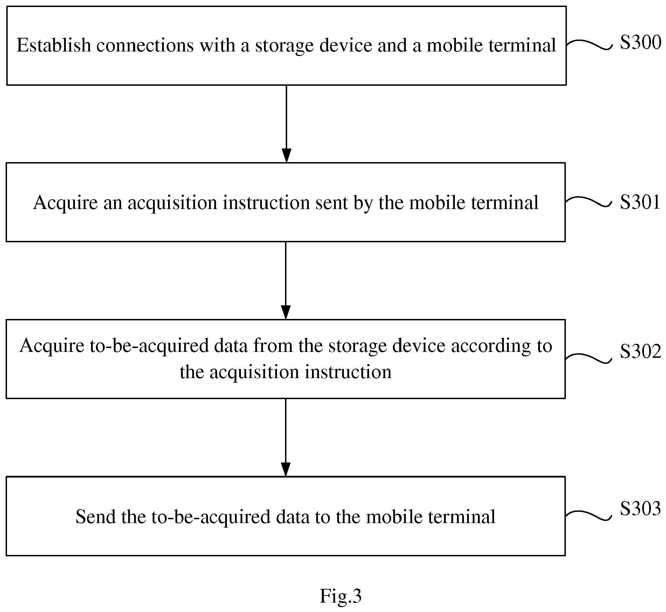

Fig. 3 illustrates a schematic process flow chart for the method of acquiring data according to an embodiment of the present disclosure, the method being implemented at the wireless access equipment side, and as shown in Fig. 3, this method including the following steps:
Step S300: establishing connections with a storage device and a mobile terminal.

Wherein, the storage device can be set inside or outside of the wireless access equipment. For example, when the storage device is set outside of the wireless access equipment, the storage device can be a portable hard disk, a U-disk, or a card reader with an inserted storage card, more particularly, the storage device can be connected with the wireless access equipment by means of a data cord, or the storage device can be directly plugged into the appropriate slot on the wireless access equipment, hence establishing a connection between the storage device and the wireless access equipment. Furthermore, the mobile terminal can be a mobile phone, a PAD, etc. The mobile terminal does not need to have an application program that controls the wireless access equipment. The wireless access equipment may communicate with the mobile terminal by use of DLNA, SMB, or other protocols.

Step S301: acquiring an acquisition instruction sent by the mobile terminal.

After the connection is established between the wireless access equipment and the mobile terminal, the mobile terminal may send an acquisition instruction to the wireless access equipment, and then the wireless access equipment acquires the acquisition instruction.

Step S302: acquiring to-be-acquired data from the storage device according to the acquisition instruction.

Step S303: sending the to-be-acquired data to the mobile terminal.

The method of acquiring data provided according to the embodiment, the method being implemented at the wireless access equipment side, connections being firstly established with a storage device and a mobile terminal to acquire an acquisition instruction from the mobile terminal, then the to-be-acquired data being acquired from the storage device according to the acquisition instruction, and finally the to-be-acquired data being sent to the mobile terminal. With the technical proposal provided by the present disclosure, the user may conveniently acquire data from the storage device via the wireless access equipment by use of a mobile terminal.

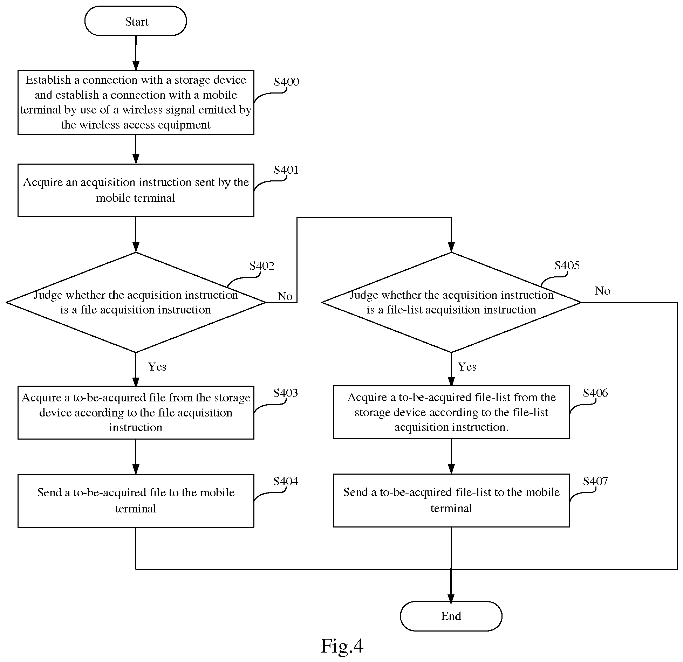

Fig. 4 illustrates a schematic process flow chart for the method of acquiring data according to another embodiment of the present disclosure, the method being implemented at the wireless access equipment side, and as shown in Fig. 4, this method including the following steps:
Step S400: establishing a connection with a storage device and establishing a connection with a mobile terminal by use of a wireless signal emitted by the wireless access equipment.

Wherein, the storage device can be set inside or outside of the wireless access equipment. The mobile terminal does not need to have an application program that controls the wireless access equipment.

Step S401: acquiring an acquisition instruction sent by the mobile terminal.

Wherein, acquisition instructions include file acquisition instructions and file-list acquisition instructions. After the connection is established between the wireless access equipment and the mobile terminal, the mobile terminal may send an acquisition instruction to the wireless access equipment, and then the wireless access equipment acquires the acquisition instruction.

Step S402: judging whether the acquisition instruction is a file acquisition instruction; if yes, then proceed to Step S403; if not, then proceed to Step S405.

Since acquisition instructions include file acquisition instructions and file-list acquisition instructions, it is necessary to judge an acquisition instruction individually so as to acquire the file according to different acquisition instruction.

Step S403: acquiring a to-be-acquired file from the storage device according to the file acquisition instruction.

After it is judged in Step S402 that the acquisition instruction is a file acquisition instruction, the to-be-acquired file is acquired from the storage device according to the file acquisition instruction.

Step S404: sending a to-be-acquired file to the mobile terminal.

For example, if the file acquisition instruction is for acquiring video file 1 from the storage device, then video file 1 is acquired from the storage device in Step S403 according to the file acquisition instruction, and video file 1 is sent to the mobile terminal in Step S404.

Step S405: judging whether the acquisition instruction is a file-list acquisition instruction; if yes, then proceed to Step S406; if not, then end this method.

After it is judged in Step S402 that the acquisition instruction is not a file acquisition instruction, Step S405 is executed to judge whether the acquisition instruction is a file-list acquisition instruction. If it is judged that the acquisition instruction is a file-list acquisition instruction, then Step S406 is executed to acquire the to-be-acquired file-list from the storage device according to the file-list acquisition instruction. If it is judged that the acquisition instruction is not a file-list acquisition instruction, then this method is ended.

Step S406: acquiring a to-be-acquired file-list from the storage device according to the file-list acquisition instruction.

Step S407: sending a to-be-acquired file-list to the mobile terminal.

For example, if the file acquisition instruction is for acquiring a file-list from the storage device, then the file-list is acquired from the storage device in Step S406 according to the file-list acquisition instruction, and the file-list is then sent to the mobile terminal in Step S407.

The method of acquiring data provided according to the embodiment, the method being implemented at the wireless access equipment side, a connection being firstly established with a storage device and a connection being established with a mobile terminal by use of a wireless signal emitted by the wireless access equipment, to acquire an acquisition instruction sent from the mobile terminal, then the to-be-acquired data being acquired from the storage device according to the actual acquisition instruction, and finally the to-be-acquired data being sent to the mobile terminal. With the technical proposal provided by the present disclosure, according to different acquisition instructions, the user may conveniently acquire data from the storage device via the wireless access equipment by use of a mobile terminal.

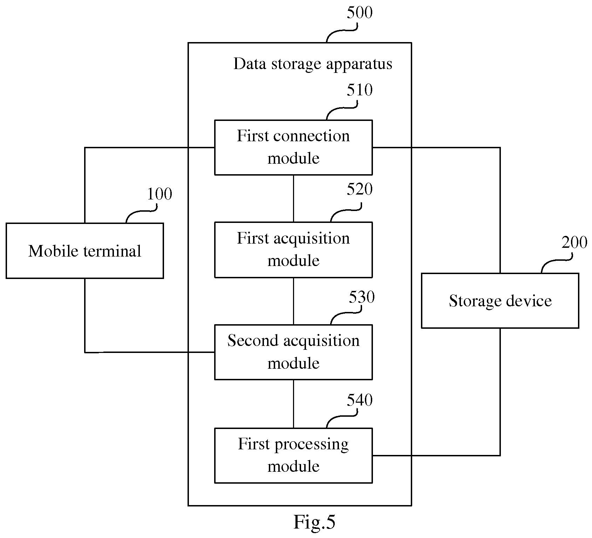

Fig. 5 is a schematic connection block diagram for the data storage apparatus, the mobile terminal, and the storage device according to an embodiment of the present disclosure, the data storage apparatus 500 being used for storing the to-be-stored data in the mobile terminal 100 into the storage device 200, and as shown in Fig. 5, the data storage apparatus 500 may be incorporated in the wireless access equipment and includes: a first connection module 510, a first acquisition module 520, a second acquisition module 530, and a first processing module 540.

The first connection module 510, configured to establish connections with the storage device 200 and the mobile terminal 100.

Wherein, the storage device 200 can be provided inside or outside of the wireless access equipment. The mobile terminal 100 shall have an application program that controls the wireless access equipment. The wireless access equipment may communicate with the mobile terminal 100 by use of DLNA, SMB, or other protocols.

The first acquisition module 520, configured to acquire a store instruction sent by the mobile terminal 100.

After the connection is established with the mobile terminal 100 by use of the first connection module 510, the user may use the mobile terminal 100 to send a store instruction to the wireless access equipment by use of the application program, and then the first acquisition module 520 acquires the store instruction sent by the mobile terminal 100.

The second acquisition module 530, configured to acquire to-be-stored data from the mobile terminal 100 according to the store instruction.

The first processing module 540, configured to store the to-be-stored data into the storage device 200.

The data storage apparatus provided according to the embodiment, connections being established with a storage device and a mobile terminal by use of a first connection module, a store instruction sent by the mobile terminal being acquired by use of a first acquisition module, then the to-be-stored data being acquired from the mobile terminal by use of a second acquisition module, and finally the to-be-stored data being stored into the storage device by use of a first processing module. The technical proposal provided by the present disclosure provides a means of storing a mobile terminal's data, whereby the user may conveniently store the data into a storage device via a wireless access equipment when it is not convenient to export data from a mobile terminal or when the mobile terminal has insufficient or limited storage space.

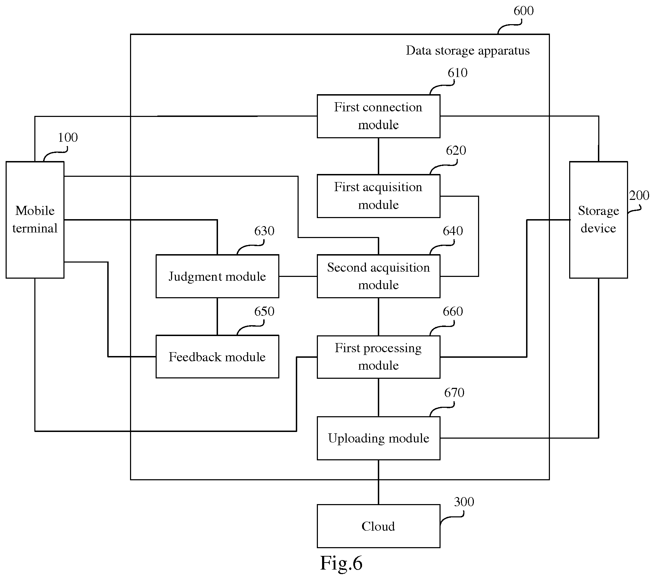

Fig. 6 is a schematic connection block diagram for the data storage apparatus, the mobile terminal, the storage device, and the cloud according to another embodiment of the disclosure, the data storage apparatus 600 being used for storing the to-be-stored data in the mobile terminal 100 into the storage device 200, and as shown in Fig. 6, the data storage apparatus 600 may be incorporated in the wireless access equipment and includes: a first connection module 610, a first acquisition module 620, a judgment module 630, a second acquisition module 640, a feedback module 650, a first processing module 660, and an uploading module 670.

The first connection module 610, configured to establish a connection with the storage device 200 and establish a connection with the mobile terminal 100 by use of a wireless signal emitted by the wireless access equipment.

Wherein, the storage device 200 can be set inside or outside of the wireless access equipment. The mobile terminal 100 shall have an application program that controls the wireless access equipment. The wireless access equipment may communicate with the mobile terminal 100 by use of DLNA, SMB, or other protocols.

The first acquisition module 620, configured to acquire a store instruction sent by the mobile terminal 100.

After the connection is established with the mobile terminal 100 by use of the first connection module 610, the user may use the mobile terminal 100 to send a store instruction to the wireless access equipment by use of the application program, and then the first acquisition module 620 acquires the store instruction sent by the mobile terminal 100.

The judgment module 630, configured to judge whether the user of the mobile terminal 100 possesses an administrator authority; if yes, then the second acquisition module 640 is triggered; if no, the feedback module 650 is triggered.

To ensure the safety of the data in the storage device 200, only when the user of the mobile terminal 100 possesses an administrator authority is he/she allowed to store the mobile terminal 100's data into the storage device 200 by means of the wireless access equipment. If the judgment module 630 judges that the user of the mobile terminal 100 possesses an administrator authority, then the second acquisition module 640 is triggered; if the judgment module 630 judges that the user of the mobile terminal 100 does not possess the administrator authority, then the feedback module 650 is triggered.

The second acquisition module 640, configured to acquire the to-be-stored data from the mobile terminal 100 according to the store instruction if the judgment module 630 judges that the user of the mobile terminal 100 possesses an administrator authority.

The feedback module 650, configured to send feedback information to the mobile terminal 100 if the judgment module 630 judges that the user of the mobile terminal 100 does not possess the administrator authority.

Should the judgment module 630 judge that the user of the mobile terminal 100 does not possess the administrator authority, the feedback module 650 sends feedback information to the mobile terminal 100, advising that the user of the mobile terminal 100 does not possess the data storage authority.

The first processing module 660, configured to store the to-be-stored data into the storage device 200 and send a storage result to the mobile terminal 100.

After the second acquisition module 640 acquires the to-be-stored data from the mobile terminal 100, the first processing module 660 stores the to-be-stored data into the storage device 200 and sends the storage result to the mobile terminal 100. More particularly, the storage result may be sent to the mobile terminal 100 as appropriate to the actual storage situation, for example the first processing module 660 may send a storage result such as insufficient storage space, storage succeeded, or storage failed to the mobile terminal 100.

The uploading module 670, configured to upload data in the storage device 200 to a cloud 300.

The uploading module 670 uploads the data in the storage device 200 to the cloud 300, thereby enabling data backup.

The data storage apparatus provided according to the embodiment, connections being established with a storage device and a mobile terminal by use of a first connection module, a store instruction sent by the mobile terminal being acquired by use of the first acquisition module, then if the judgment module judges that the user of the mobile terminal possesses an administrator authority, the second acquisition module acquiring the to-be-stored data from the mobile terminal, and finally the to-be-stored data being stored into the storage device by use of a first processing module and the data in the storage device being uploaded to the cloud by use of the uploading module. The technical proposal provided by the present disclosure provides a means of storing a mobile terminal's data, whereby the user possessing the administrator authority may conveniently store the data into a storage device via a wireless access equipment when it is not convenient to export data from the mobile terminal or when the mobile terminal has insufficient or limited storage space, thus ensuring the safety of data in the storage device.

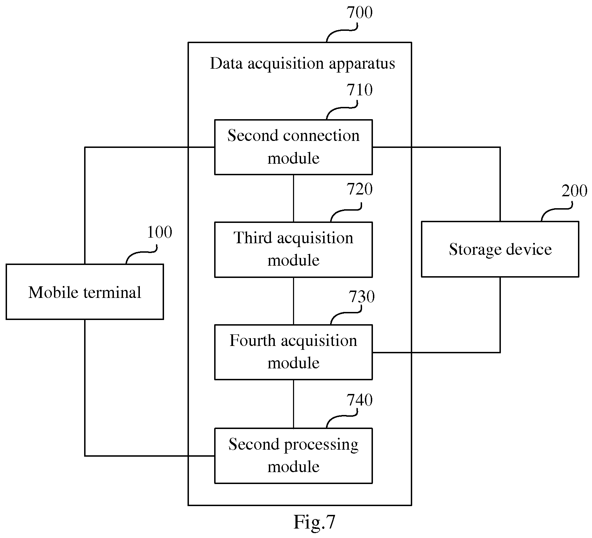

Fig. 7 is a schematic connection block diagram for the data acquisition apparatus, the mobile terminal, and the storage device according to an embodiment of the disclosure, the data acquisition apparatus 700 being used for enabling the mobile terminal 100 to acquire the to-be-acquired data from the storage device 200, and as shown in Fig. 7, the data acquisition apparatus 700 may be incorporated in the wireless access equipment and includes: a second connection module 710, a third acquisition module 720, a fourth acquisition module 730, and a second processing module 740.

The second connection module 710, configured to establish connections with a storage device 200 and a mobile terminal 100.

Wherein, the storage device can be provided inside or outside of the wireless access equipment. The mobile terminal 100 does not need to have an application program that controls the wireless access equipment. The wireless access equipment may communicate with the mobile terminal 100 by use of DLNA, SMB, or other protocols.

The third acquisition module 720, configured to acquire an acquisition instruction sent by the mobile terminal 100.

After the connection is established with the mobile terminal 100 by use of the second connection module 710, the user may use the mobile terminal 100 to send an acquisition instruction to the wireless access equipment without the necessity of using an application program, and then the third acquisition module 720 acquires the acquisition instruction sent by the mobile terminal 100.

The fourth acquisition module 730, configured to acquire to-be-acquired data from the storage device 200 according to the acquisition instruction.

The second processing module 740, configured to send the to-be-acquired data to the mobile terminal 100.

The data acquisition apparatus provided according to the embodiment, connections being established with a storage device and a mobile terminal by use of the second connection module, an acquisition instruction sent by the mobile terminal being acquired by use of the third acquisition module, then the to-be-acquired data being acquired from the mobile terminal by use of the fourth acquisition unit, and finally the to-be-acquired data being sent to the mobile terminal by use of the second processing module. With the technical proposal provided by the present disclosure, the user may conveniently acquire data from the storage device via the wireless access equipment by use of a mobile terminal.

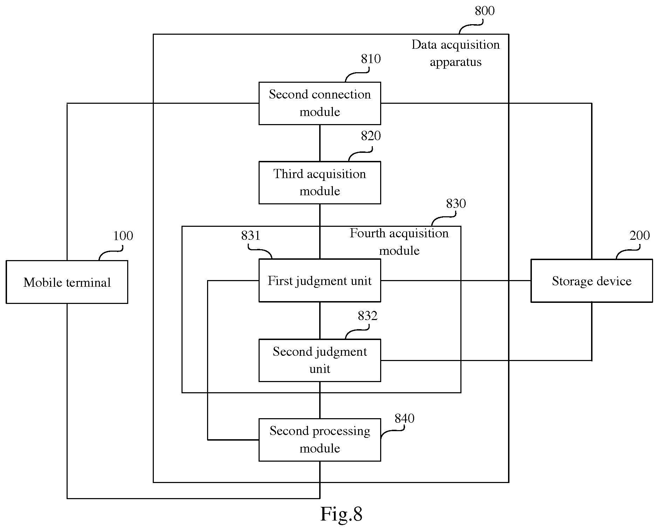

Fig. 8 is a schematic connection block diagram for the data acquisition apparatus, the mobile terminal, and the storage device according to another embodiment of the disclosure, the data acquisition apparatus 800 being used for enabling the mobile terminal 100 to acquire the to-be-acquired data from the storage device 200, and as shown in Fig. 8, the data acquisition apparatus 800 may be incorporated in the wireless access equipment and includes: a second connection module 810, a third acquisition module 820, a fourth acquisition module 830, and a second processing module 840. Wherein, the fourth acquisition module 830 includes a first judgment unit 831 and a second judgment unit 832.

The second connection module 810, configured to establish a connection with the storage device 200 and establish a connection with the mobile terminal 100 by use of a wireless signal emitted by the wireless access equipment.

Wherein, the storage device 200 can be set inside or outside of the wireless access equipment.

The third acquisition module 820, configured to an acquiring acquisition instruction sent by the mobile terminal 100.

Wherein, acquisition instructions include file acquisition instructions and file-list acquisition instructions. After the connection is established with the mobile terminal 100 by use of the second connection module 810, the user may use the mobile terminal 100 to send an acquisition instruction to the wireless access equipment without the necessity of using an application program, and then the third acquisition module 820 acquires the acquisition instruction sent by the mobile terminal 100.

The first judgment unit 831, configured to judge whether the acquisition instruction is a file acquisition instruction; if yes, then a file is acquired from the storage device 200 according to the file acquisition instruction; if not, then the second judgment unit 832 is triggered.

The second judgment unit 832, configured to judge whether the acquisition instruction is a file-list acquisition instruction; if yes, then a file-list is acquired from the storage device 200 according to the file-list acquisition instruction.

The second processing module 840, configured to send the to-be-acquired data to the mobile terminal.

Wherein, the to-be-acquired data include to-be-acquired files and to-be-acquired file-lists.

For example, if the file acquisition instruction is for acquiring video file 1 from the storage device 200, then the first judgment unit 831 acquires video file 1 from the storage device 200 according to the file acquisition instruction, and the second processing module 840 sends video file 1 to the mobile terminal 100. For another example, if the file-list acquisition instruction is for acquiring a file-list from the storage device 200, then the second judgment unit 832 acquires the file-list from the storage device 200 according to the file-list acquisition instruction, and the second processing module 840 sends the file-list to the mobile terminal 100.

The data acquisition apparatus provided according to the embodiment, connections being established with a storage device and a mobile terminal by use of the second connection module, an acquisition instruction sent by the mobile terminal being acquired by use of the third acquisition module, then the fourth acquisition module acquires the to-be-acquired data from the storage device according to the actual instruction, and finally the to-be-acquired data are sent to the mobile terminal by use of the second processing module. With the technical proposal provided by the present disclosure, according to different acquisition instructions, the user may conveniently acquire data from the storage device via the wireless access equipment by use of a mobile terminal.

The present disclosure also provides a data storage/acquisition system, the system including a wireless access equipment, a storage device, and a mobile terminal. Wherein, the wireless access equipment includes the aforesaid data storage apparatus and/or the aforesaid data acquisition apparatus; the storage device connects with the data storage apparatus and/or the data acquisition apparatus; the mobile terminal connects with the data storage apparatus and/or the data acquisition apparatus.

The algorithms and illustrations given herein are not intrinsically related to any specific computer, virtual system, or other device. Various generic systems may also work with what are instructed and illustrated herein. According to the above description, the structure and components to build such systems are obvious. Moreover, the present disclosure is not limited to any specific programming language. It is understandable that the content of the present disclosure described herein may be realized in various programming languages and the description given above for any particular language is for the purpose of disclosing the optimum embodiment of the present disclosure.

The description given herein illustrates a lot of specific details. However, it is understandable that the embodiments of the present disclosure can be implemented under conditions without such specific details. In some examples, generally known methods, structures, or technologies have not been given specifically in order to avoid blurring the understanding of the description.

Similarly, it shall be understood that in the description of the exemplary embodiments of the present disclosure various characteristics of the present disclosure are sometimes grouped into an individual embodiment, diagram, figure, or description thereof for the sake of simplifying this disclosure and assisting in understanding one or more aspects of the present disclosure. However, the disclosed method should not be interpreted as reflecting the following intent: the present disclosure requested for protection demands more characteristics than the characteristics stated in each individual claim. To be more specific, as reflected in the following claims, the present disclosure aspects are fewer than all the characteristics disclosed above in individual embodiment. Hence, the claim according to a specific embodiment is hereby expressly incorporated into the specific embodiment, wherein each claim per se is treated as an individual embodiment of the present disclosure.

Persons skilled in the art understand and can effect adaptive modification to the modules in the devices described in the embodiments and have them configured in one or more pieces of device other than that described in the embodiments. The modules or units or assemblies in the embodiments can be grouped into one module or unit or assembly, and, more than that, can be divided into multiple submodules or subunits or sub-assemblies. With the exception of at least those that are mutually repulsive among these characteristics and/or processes or units, all the characteristics disclosed in the description (including accompanying claims, abstract, and attached drawings) as well as any methods, or any process or unit of the device disclosed in such a way may be combined in any manner. Unless otherwise expressly stated, every characteristic disclosed in the description (including accompanying claims, abstract, and attached drawings) may be substituted by substitution characteristic that provides identical, equivalent, or similar purpose.

Moreover, persons of skill in the art can understand that although some embodiments illustrated herein include certain characteristics instead of other characteristics contained in other embodiments, the combination of characteristics from different embodiments are still within the scope of the present disclosure and thus form different embodiments. For example, in the following claims any of the embodiments for which protection is requested may be used in any combination.

The embodiments of each component of the present disclosure can be realized using hardware or using software modules running on one or more processors, or be realized by using them in combination. Persons skilled in the art should understand that some or all functions of some or all components according to the embodiments of the present disclosure can be realized in practice using microprocessors or digital signal processors (DSP). The present disclosure can also be realized as device or apparatus programs (e.g., computer program or computer program products) used to execute some or all of the methods described herein. Such realized programs of the present disclosure can be stored on computer readable media or can be in one or more signal forms. Such signals can become available by downloading from the Internet websites or be made available in media signals or in any other form.

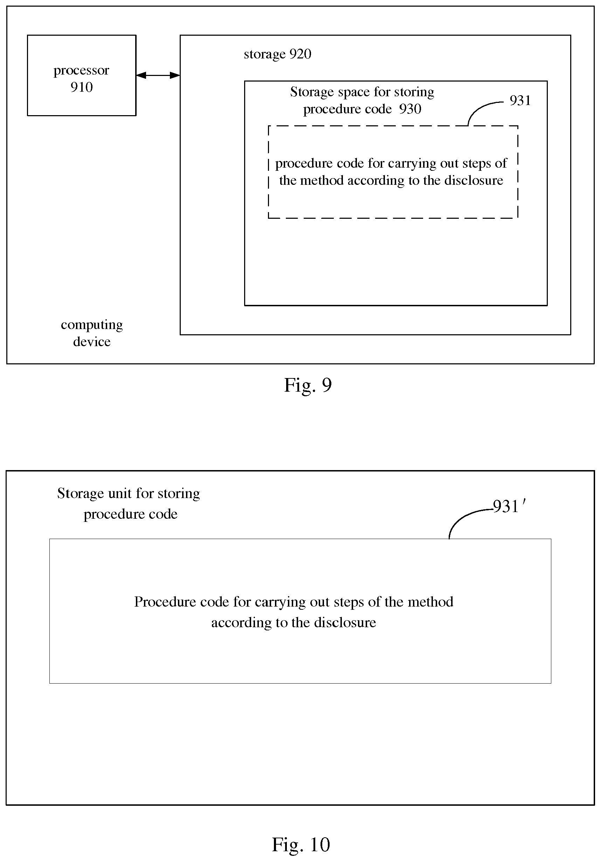

For example, Fig. 9 shows a diagram for a computing device for executing the method of data storage and acquisition according to the disclosure. The computing device traditionally comprises a processor 910 and a computer program product in the form of storage 920 or a computer readable medium. The storage 920 can be electronic storage such as flash memory, EEPROM (Electrically Erasable Programmable Read -Only Memory), EPROM, hard disk or ROM, and the like. Storage 920 possesses storage space 930 for storing procedure code 931 for carrying out any steps of aforesaid method. For example, storage space 930 for storing procedure code can comprise various procedure codes 931 used for realizing any steps of aforesaid method. These procedure codes can be read out from one or more computer program products or write in one or more computer program products. The computer program products comprise procedure code carriers such as hard disk, Compact Disc (CD), memory card or floppy disk and the like. These computer program products usually are portable or fixed storage cell as shown in Fig. 10. The storage cell can possess memory paragraph, storage space like the storage 920 in the computing device in Fig. 9. The procedure code can be compressed in, for example, a proper form. Generally, storage cell comprises computer readable code 931', i.e. the code can be read by processors such as 910 and the like. When the codes run on a computer device, the computer device can carry out various steps of the method described above.

It should be noted that the above embodiments provide description of the present disclosure rather than define the limits of the present disclosure, and persons of skill in the art may devise replacement embodiments without departing from the scope of the accompanying claims. In the claims, any reference symbol in brackets shall not constitute any limit to the claims. The word "include" does not rule out any elements or steps not listed in the claims. The word "a", "an", or "one" before an element do not rule out the existence of a plurality of such elements. The present disclosure can be realized by means of hardware consisting of several different elements or by means of appropriately programmed computers. In the unit claims where a number of apparatuses are listed, some of such apparatuses can be implemented in practice using a same hardware item. The word "first", "firstly", "second", "secondly", and "third" or "thirdly", etc., do not connote any sequence or order. Such words may be interpreted as names.

## Claims

1. A method of storing data, **characterized in that** said method is implemented at a wireless access equipment side and comprises:
establishing connections with a storage device and a mobile terminal;
acquiring a store instruction sent by said mobile terminal;
acquiring to-be-stored data from said mobile terminal according to said store instruction; and
storing said to-be-stored data into said storage device.

2. The method of storing data according to claim 1, **characterized in that** the establishing connections with a storage device and a mobile terminal further comprises: establishing a connection with the storage device and establishing a connection with the mobile terminal by use of a wireless signal emitted by said wireless access equipment.

3. The method of storing data according to claim 1, **characterized in that** before acquiring to-be-stored data from said mobile terminal according to said store instruction, said method further comprises: judging whether a user of the mobile terminal possesses an administrator authority;
the acquiring to-be-stored data from said mobile terminal according to said store instruction comprises: acquiring the to-be-stored data from the mobile terminal according to said store instruction if it is judged that the user of said mobile terminal possesses an administrator authority; and
said method further comprises: sending feedback information to the mobile terminal if it is judged that the user of the said mobile terminal does not possess the administrator authority.

4. The method of storing data according to any one of claims 1-3, **characterized in that** said storage device is set inside or outside of said wireless access equipment.

5. The method of storing data according to any one of claims 1-3, **characterized in that** said storing said to-be-stored data into said storage device further comprises: storing said to-be-stored data into said storage device and sending the storage result to said mobile terminal.

6. The method of storing data according to any one of claims 1-3, **characterized in that** said method further comprises: uploading data in said storage device to a cloud.

7. A method of acquiring data, **characterized in that** said method is implemented at a wireless access equipment side and comprises:
establishing connections with a storage device and a mobile terminal;
acquiring an acquisition instruction sent by said mobile terminal;
acquiring to-be-acquired data from said storage device according to said acquisition instruction; and
sending said to-be-acquired data to said mobile terminal.

8. The method of acquiring data according to claim 7, **characterized in that** the establishing connections with a storage device and a mobile terminal further comprises:
establishing a connection with the storage device and establishing a connection with the mobile terminal by use of a wireless signal emitted by said wireless access equipment.

9. The method of acquiring data according to claim 7, **characterized in that** said acquisition instructions comprise file acquisition instructions and file-list acquisition instructions.

10. The method of acquiring data according to claim 9, **characterized in that** said acquiring to-be-acquired data from said storage device according to said acquisition instruction further comprises:
judging whether said acquisition instruction is a file acquisition instruction; if yes, acquiring a to-be-acquired file from said storage device according to said file acquisition instruction; and if not, then judging whether said acquisition instruction is a file-list acquisition instruction; and
if it is judged that said acquisition instruction is a file-list acquisition instruction, acquiring a to-be-acquired file list from said storage device according to said file-list acquisition instruction.

11. The method of acquiring data according to any one of claims 7-10, **characterized in that** said storage device is set inside or outside of said wireless access equipment.

12. A data storage apparatus, **characterized in that** said apparatus is configured to store to-be-stored data in a mobile terminal into a storage device, said apparatus comprising:
a first connection module configured to establish connections with the storage device and the mobile terminal;
a first acquisition module configured to acquire a store instruction sent by said mobile terminal;
a second acquisition module configured to acquire to-be-stored data from said mobile terminal according to said store instruction; and
a first processing module configured to store said to-be-stored data into said storage device.

13. The data storage apparatus according to claim 12, **characterized in that** the first connection module is further configured to establish a connection with the storage device and establish a connection with the mobile terminal by use of a wireless signal emitted by said wireless access equipment.

14. The data storage apparatus according to claim 12, **characterized in that** the apparatus further comprises a judgment module configured to judge whether a user of the mobile terminal side possesses an administrator authority; if yes, then the second acquisition module is triggered;
the second acquisition module further configured to acquire the to-be-stored data from the mobile terminal according to said store instruction if the judgment module judges that the user of said mobile terminal possesses the administrator authority; and
the apparatus further comprises a feedback module configured to send feedback information to the mobile terminal if the judgment module judges that the user of the said mobile terminal does not possess the administrator authority.

15. The data storage apparatus according to any one of claims 12-14, **characterized in that** the storage device is set inside or outside of the wireless access equipment.

16. The data storage apparatus according to any one of claims 12-14, **characterized in that** the first processing module is further configured to store said to-be-stored data into said storage device and send the storage result to said mobile terminal.

17. The data storage apparatus according to any one of claims 12-14, **characterized in that** the apparatus further comprises an uploading module configured to upload data in the storage device to a cloud.

18. A data acquisition apparatus, **characterized in that** said apparatus is configured to enable a mobile terminal to acquire to-be-acquired data from a storage device, said apparatus comprising:
a second connection module configured to establish connections with the storage device and the mobile terminal;
a third acquisition module configured to acquire an acquisition instruction sent by said mobile terminal;
a fourth acquisition module configured to acquire to-be-acquired data from said storage device according to said acquisition instruction; and
a second processing module configured to send said to-be-acquired data to said mobile terminal.

19. The data acquisition apparatus according to claim 18, **characterized in that** the second connection module is further configured to establish a connection with the storage device and establish a connection with the mobile terminal by use of a wireless signal emitted by said wireless access equipment.

20. The data acquisition apparatus according to claim 18, **characterized in that** said acquisition instructions comprise file acquisition instructions and file-list acquisition instructions.

21. The data acquisition apparatus according to claim 20, **characterized in that** the fourth acquisition module comprises a first judgment unit and a second judgment unit,
the first judgment unit configured to judge whether said acquisition instruction is a file acquisition instruction; if yes, then a to-be-acquired file is acquired from said storage device according to said file acquisition instruction; and if not, then the second judgment unit is triggered;
the second judgment unit configured to judge whether said acquisition instruction is a file-list acquisition instruction; and if it is judged that said acquisition instruction is a file-list acquisition instruction, a to-be-acquired file list is acquired from said storage device according to said file-list acquisition instruction.

22. The data acquisition apparatus according to any one of claims 18-21 **characterized in that** said storage device is set inside or outside of said wireless access equipment.

23. A data storage/acquisition system, **characterized in that** it comprises a wireless access equipment, a storage device, and a mobile terminal;
wherein, said wireless access equipment comprises a data storage apparatus according to any one of claims 12-17 and/or a data acquisition apparatus according to any one of claims 18-22; said storage device is connected with said data storage apparatus and/or said data acquisition apparatus; and said mobile terminal is connected with said data storage apparatus and/or said data acquisition apparatus.
